# EUROPÄISCHE PATENTSCHRIFT

(11) **EP 2 666 567 B1**
(45) Veröffentlichungstag und Bekanntmachung des Hinweises auf die Patenterteilung: **12.05.2021**
(21) Anmeldenummer: 13160062.9
(22) Anmeldetag: 18.08.2009
(51) Int. Cl.: B23B 31/02, B23B 31/117

(54) **Werkzeughaltervorrichtung**
Tool holder device
Dispositif porte-outil

(30) Priorität: 29.08.2008 DE 102008044996
(43) Veröffentlichungstag der Anmeldung: 27.11.2013
(62) Teilanmeldung aus: 09777948.2
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(56) Entgegenhaltungen:
- EP-A- 0 618 030
- EP-A- 1 084 782
- DE-A1- 4 326 023
- GB-A- 2 401 335
- JP-A- 8 099 245
- US-A1- 2002 145 260

## Beschreibung

Die Erfindung betrifft eine Werkzeughaltervorrichtung nach dem Oberbegriff des Anspruchs 1. Insbesondere betrifft die Erfindung eine Werkzeughaltervorrichtung für Werkzeuge mit einem Schaft, z.B. Schrumpfaufnahmen, oder in der Bauart als Flächenspannfutter, wie Weldonaufnahmen oder Whistle-Notch-Aufnahmen, sowie in der Bauart als Spannzangenaufnahmen, wie z.B. ER-Spannzangenaufnahmen, OZ-Spannzangenaufnahmen oder Hochgenauigkeits-Spannzangenaufnahmen.

Aus der EP 1 074 322 A1 ist ein rotierendes Futter bekannt, welches als Schrumpfspannfutter für ein Werkzeug, insbesondere für einen Bohrer oder Fräser, ausgebildet ist. Dieses rotierende Futter besitzt einen Kühlmittelzuführungskanal. Das Schrumpffutter besitzt eine Aufnahmebohrung für das Werkzeug, in dem das Werkzeug im Betrieb mittels eines Schrumpfsitzes gehalten ist. Die Aufnahmebohrung weist über den Umfang ihrer Innenseite verteilt mehrere axial verlaufende Längsnuten auf, welche mit dem Zuführkanal für ein Kühlmittel verbunden sind. Die Nuten erstrecken sich bis zum freien Ende des Schrumpffutters und münden dort ins Freie. Die Nuten sind hinsichtlich ihres Querschnitts als Schmalnuten ausgebildet. Bei einem derartigen Schrumpffutter ist beobachtet worden, dass sich insbesondere bei hohen Rotationsdrehzahlen im Betrieb des Futters, welche insbesondere bei kleinen Werkzeugdurchmessern auftreten, ein Ablösen des stirnseitig austretenden Kühlmittelstrahls vom Werkzeug stattfindet und insbesondere bei längeren Werkzeugen eine zuverlässige Versorgung des Schneidbereiches mit Kühlmittel nicht immer gewährleistet ist. Durch diese schmale Ausführung der Nuten tritt das Kühlmittel in Form von drei singulären Strahlen aus. Auch hierdurch ist nicht immer gewährleistet, dass eine zuverlässige Kühlung des Werkzeuges im Schneidbereich/Zerspanungsbereich sichergestellt ist.

Aus der DE 198 32 793 B4 ist eine Werkzeughaltervorrichtung in Spannzangenbauart bekannt, bei der Kühlmittel im Inneren der Werkzeughaltervorrichtung geführt wird und durch Schlitze der Spannzange am Werkzeugschaft vorbei zur freien Stirnseite der Werkzeughaltervorrichtung geführt wird. Dort sitzt eine Abdeckkappe, welche einen Einsatz besitzt, wobei der Einsatz einen Ringspalt bildet, durch den Kühlmittel aus dem Inneren der Werkzeughaltervorrichtung ins Freie gelangen kann.

Der Kühlmittelaustritt ins Freie erfolgt hierbei relativ undefiniert und kann nicht immer eine saubere Kühlwasserstrahlführung entlang des Werkzeuges sicherstellen. Außerdem ist für eine Werkzeughaltervorrichtung gemäß der DE 198 32 793 B4 ein erheblicher Kühlmitteldurchsatz erforderlich, was wiederum hohe Pumpleistungen für Kühlmittelpumpen erfordert.

Aus der DE 693 31 325 T2 ist ein Werkzeughaltesystem nach Schrumpffutterbauart bekannt, wobei in einer Aufnahmeöffnung für ein zylindrisches Werkzeug Längsnuten vorhanden sind, durch die Kühlmittel geleitet werden kann. Die Längsnuten sind im Querschnitt als Schmalnuten mit gerundetem Nutgrund ausgebildet.

Aus der FR 22 39 84 9 ist eine Werkzeughaltervorrichtung bekannt, welche ebenfalls in einer Aufnahme für ein Werkzeug Längsnuten aufweist, durch die ein Kühlfluid leitbar ist. Die Nuten sind im Querschnitt als Schmalnuten mit einem eckigen Nutgrund ausgebildet. Hierdurch tritt die Kühlflüssigkeit in Form von gebündelten Strahlen ins Freie aus. Dies ist unerwünscht.

Aus der US 2002/0145260 ist ein Werkzeughalter mit einer von außen, vor der Stirnseite des Werkzeughalters angesetzten Kappe bekannt, die einen über den Werkzeughalterkörper hervorstehenden Stauraum für das Kühlmittel bildet, von dem aus das Kühlmittel nach außen abgegeben wird.

Aus der japanischen Druckschrift JP 8-99245, auf der der Oberbegriff von Anspruch 1 basiert, ist eine Konstruktion bekannt, die eine Stauscheibe für das durch die Werkzeugaufnahmebohrung herangeleitete Kühlmittel besitzt, die, nach außen überstehend, auf die Stirnseite der Werkzeughaltevorrichtung aufgeschraubt ist und einen Stau- bzw. Sammelraum für das Kühlmittel begrenzt, der im Wesentlichen außerhalb der Aufnahmeöffnung der Werkzeughaltevorrichtung liegt, wodurch bei dieser zusätzlicher Bauraum in Richtung der Längsachse L des Werkzeugs gebraucht wird.

Aufgabe der vorliegenden Erfindung ist es daher, eine Werkzeughaltervorrichtung, insbesondere eine Werkzeughaltervorrichtung in Schrumpffutterbauweise anzugeben, bei der die Kühlmittelführung innerhalb der Werkzeughaltervorrichtung optimiert ist und insbesondere beim Austritt der Kühlflüssigkeit aus der Werkzeughaltervorrichtung in Umfangsrichtung um ein Rotationswerkzeug ein geschlossener oder im Wesentlichen geschlossener Kühlmittelmantel, welcher am Schaft des Werkzeuges bzw. am Werkzeug anliegt, gebildet werden kann. Insbesondere sollen Maßnahmen angegeben werden, welche es ermöglichen, den geschlossenen oder im Wesentlichen geschlossenen Kühlmittelmantel um das Rotationswerkzeug auch bei hohen Drehzahlen, unter Einfluss der Fliehkräfte, möglichst nah am Werkzeug, d. h. möglichst gebündelt zu führen und ein Aufpilzen bzw. Aufstreuen des Kühlmittelmantels um das Werkzeug zu minimieren bzw. zu verhindern. Als Kühlmittel kommen alle Arten von Flüssigkeiten in Frage, insbesondere eine Flüssigkeit, ein Gas oder ein Gas-Öl-Gemisch (Ölnebel).

Weiterhin ist es Aufgabe der Erfindung, mit möglichst geringem Kühlmittelvolumenstrom eine möglichst effiziente Kühlung definiert an den Stellen, an denen die Zerspanung stattfindet, zu gewährleisten.

Weiterhin ist es die Aufgabe der Erfindung, einen geschlossenen Kühlmittelmantel um das Zerpanungswerkzeug (Rotationswerkzeug) mit befriedigender Strahlführung zur Verfügung zu stellen, ohne allzu große Einschränkungen hinsichtlich der maximal nutzbaren Werkzeuglänge hinnehmen zu müssen.

Diese Aufgaben werden mit einer Werkzeughaltervorrichtung mit den Merkmalen des Anspruchs 1 gelöst. Vorteilhafte Ausführungsformen sind in den Unteransprüchen angegeben.

Die Erfindung bildet eine gattungsgemäße Werkzeughaltervorrichtung nach dem Oberbegriff des Anspruchs 1 dadurch weiter, dass im Bereich des freien Endes des Werkzeughalterkörpers ein Kühlmittelstau und/oder Sammelraum vorhanden ist, in den die zumindest eine Kühlmittelleiteinrichtung mündet und wobei der Kühlmittelstau und/oder Sammelraum über einen Ringspalt mit der Umgebung der Werkzeughaltervorrichtung verbunden ist, wobei der Kühlmittelstau und/oder Sammelraum und der Ringspalt zumindest teilweise vom Werkzeugschaft begrenzt ist mit einem Deckelelement, das eine Lochscheibe ist, welche in einer stirnseitigen Vertiefung des Werkzeughalterkörpers sitzt und das eine Austrittsöffnung besitzt, welche zusammen mit dem Werkzeugschaft den Ringspalt bildet.

Auf diese Art und Weise wird eine gute Kühlmittelzufuhr zum Werkzeug sichergestellt ohne allzu große Einschränkungen hinsichtlich der maximal nutzbaren Werkzeuglänge hinnehmen zu müssen.

Weiterhin hat sich als zweckmäßig erwiesen, innerhalb oder au-ßerhalb des Werkzeughalterkörpers einen Stau- und/oder Sammelraum für Kühlmittel vorzusehen, wobei das Kühlmittel vom Stau- und/oder Sammelraum aus durch einen Ringspalt oder einen Strahlformungsspalt, welcher den Werkzeugschaft umgibt, als vollständig geschlossener Kühlmittelmantel austreten kann.

Weitere vorteilhafte Ausführungsformen sind in weiteren Ansprüchen angegeben und ergeben sich aus der nachfolgenden Beschreibung einzelner Ausführungsbeispiele.

Im Folgenden wird die Erfindung anhand der Zeichnung beispielhaft näher erläutert. Es zeigen:
Figur 1: eine erste Ausführungsform einer nicht erfindungsgemäßen Werkzeughaltervorrichtung in der Bauart eines Schrumpffutters in einem Teillängsschnitt;
Figur la: eine Werkzeughaltervorrichtung gemäß Figur 1 in einer Draufsicht auf ihre werkzeugseitige Stirnseite
Figur 2: eine zweite Ausführungsform einer nicht erfindungsgemäßen Werkzeughaltervorrichtung in der Bauart eines Schrumpffutters in einem Teillängsschnitt;
Figur 2a: eine Werkzeughaltervorrichtung gemäß Figur 2 in einer Draufsicht auf ihre werkzeugseitige Stirnseite;
Figur 3: eine weitere Ausführungsform einer nicht erfindungsgemäßen Werkzeughaltervorrichtung in der Bauart eines Schrumpffutters in einem Teillängsschnitt;
Figur 3a: eine Werkzeughaltervorrichtung gemäß Figur 3 in einer Draufsicht auf ihre werkzeugseitige Stirnseite;
Figur 4: eine weitere Ausführungsform einer nicht erfindungsgemäßen Werkzeughaltervorrichtung in der Bauart eines Schrumpffutters in einem Teillängsschnitt;
Figur 4a: eine Werkzeughaltervorrichtung gemäß Figur 4 in einer Draufsicht auf ihre werkzeugseitige Stirnseite;
Figur 5: eine weitere Ausführungsform einer nicht erfindungsgemäßen Werkzeughaltervorrichtung in der Bauart eines Schrumpffutters in einem Teillängsschnitt;
Figur 5a: eine Werkzeughaltervorrichtung gemäß Figur 5 in einer Draufsicht auf ihre werkzeugseitige Stirnseite;
Figur 6: eine weitere Ausführungsform einer nicht erfindungsgemäßen Werkzeughaltervorrichtung in der Bauart eines Schrumpffutters in einem Teillängsschnitt;
Figur 6a: eine Werkzeughaltervorrichtung gemäß Figur 6 in einer Draufsicht auf ihre werkzeugseitige Stirnseite;
Figur 7: eine weitere Ausführungsform einer nicht erfindungsgemäßen Werkzeughaltervorrichtung in der Bauart eines Schrumpffutters in einem Teillängsschnitt;
Figur 7a: eine Werkzeughaltervorrichtung gemäß Figur 7 in einer Draufsicht auf ihre werkzeugseitige Stirnseite;
Figur 8: eine weitere Ausführungsform einer nicht erfindungsgemäßen Werkzeughaltervorrichtung in der Bauart eines Schrumpffutters in einem Teillängsschnitt;
Figur 8a: eine Werkzeughaltervorrichtung gemäß Figur 8 in einer Draufsicht auf ihre werkzeugseitige Stirnseite;
Figur 9: eine weitere Ausführungsform einer nicht erfindungsgemäßen Werkzeughaltervorrichtung in der Bauart eines Schrumpffutters in einem Teillängsschnitt;
Figur 9a: eine Werkzeughaltervorrichtung gemäß Figur 9 in einer Draufsicht auf ihre werkzeugseitige Stirnseite;
Figur 10: eine weitere Ausführungsform einer nicht erfindungsgemäßen Werkzeughaltervorrichtung in der Bauart eines Schrumpffutters in einem Teillängsschnitt;
Figur 11: eine weitere Ausführungsform einer nicht erfindungsgemäßen Werkzeughaltervorrichtung in der Bauart eines Schrumpffutters in einem Teillängsschnitt;
Figur 12: eine weitere Ausführungsform einer nicht erfindungsgemäßen Werkzeughaltervorrichtung in der Bauart eines Schrumpffutters in einem Teillängsschnitt;
Figur 13: eine weitere Ausführungsform einer nicht erfindungsgemäßen Werkzeughaltervorrichtung in der Bauart eines Schrumpffutters in einem Teillängsschnitt;
Figur 14: eine weitere Ausführungsform einer nicht erfindungsgemäßen Werkzeughaltervorrichtung in der Bauart eines Schrumpffutters in einem Teillängsschnitt;
Figur 15: eine weitere Ausführungsform einer nicht erfindungsgemäßen Werkzeughaltervorrichtung in der Bauart eines Schrumpffutters in einem Teillängsschnitt;
Figur 15a: eine Werkzeughaltervorrichtung gemäß Figur 15 in einer Draufsicht auf ihre werkzeugseitige Stirnseite;
Figur 16: eine Ausführungsform der erfindungsgemäßen Werkzeughaltervorrichtung in der Bauart eines Schrumpffutters in einem Teillängsschnitt;
Figur 16a: eine Werkzeughaltervorrichtung gemäß Figur 16 in einer Draufsicht auf ihre werkzeugseitige Stirnseite;
Figur 16b: eine Detailansicht auf eine Einzelheit "X" gemäß Figur 16;
Figur 17: ein Einlegeteil/Einsatzteil (Deckelelement) der Ausführungsform gemäß Figur 16 in einer Draufsicht;
Figur 17a: das Einlegeteil/Einsatzteil (Deckelelement)gemäß Figur 17 in einer Querschnittsansicht;
Figur 18: eine weitere Ausführungsform einer nicht erfindungsgemäßen Werkzeughaltervorrichtung in der Bauart eines Schrumpffutters in einem Teillängsschnitt;
Figur 18a: eine Werkzeughaltervorrichtung gemäß Figur 18 in einer Draufsicht auf ihre werkzeugseitige Stirnseite;
Figur 18b: eine Detailansicht auf eine Einzelheit "X" gemäß Figur 18;
Figur 19: eine Draufsicht auf ein Einzelteil der Ausführungsform von Figur 18;
Figur 19a: das Einzelteil aus Figur 19 in Querschnittsansicht;
Figur 20: eine weitere Ausführungsform einer nicht erfindungsgemäßen Werkzeughaltervorrichtung in der Bauart eines Schrumpffutters in einem Teillängsschnitt;
Figur 20a: eine Werkzeughaltervorrichtung gemäß Figur 20 in einer Draufsicht auf ihre werkzeugseitige Stirnseite;
Figur 20b: eine Detailansicht auf eine Einzelheit "X" gemäß Figur 20;
Figur 21: eine Draufsicht auf ein Einzelteil der Ausführungsform von Figur 20;
Figur 21a: das Einzelteil aus Figur 20 in Querschnittsansicht.

Im Folgenden wird die Erfindung anhand eines Ausführungsbeispiels der erfindungsgemäßen Werkzeughaltervorrichtung in der Bauart eines Schrumpffutters dargestellt. Selbstverständlich sind die dargestellten Einzelheiten für einen Fachmann auch ohne weiteres auf Werkzeughaltervorrichtungen in der Bauart von Weldonaufnahmen bzw. Whistle-Notch-Aufnahmen übertragbar. Gleiches gilt auch für Werkzeughaltervorrichtungen in Spannzangen-Bauart, beispielsweise ER-Spannzangenaufnahmen, OZ-Spannzangenaufnahmen und/oder Hochgenauigkeits- Spannzangenaufnahmen.

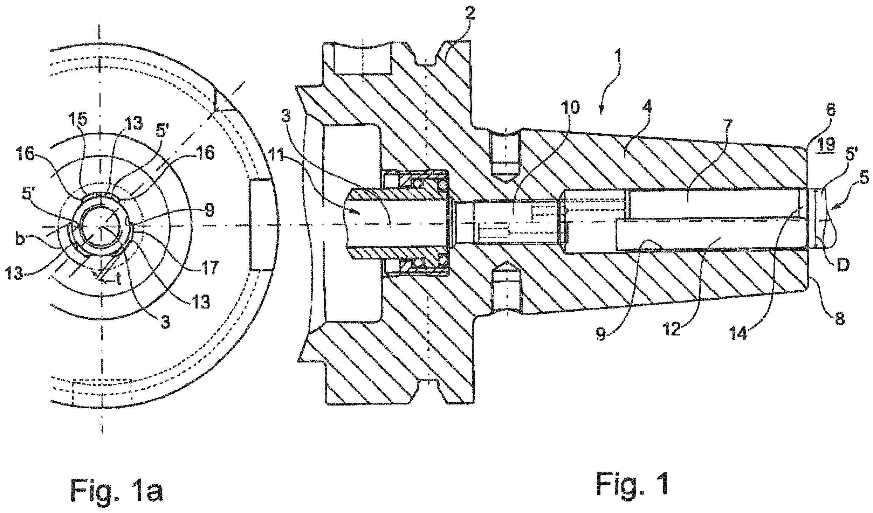

Eine erste, nicht erfindungsgemäße Ausführungsform einer Werkzeughalter-Vorrichtung 1 (Figuren 1, la) besitzt einen Werkzeughalterkörper 2 mit einer axialen Längsmittelachse 3, um die der Werkzeughalterkörper 2 im Wesentlichen rotationssymmetrisch ausgebildet ist. Der Werkzeughalterkörper 2 besitzt einen Spannabschnitt 4 zur Aufnahme eines Rotationswerkzeuges/Werkzeuges 5. Das Werkzeug 5 besitzt einen Werkzeugschaft 5', wobei der Schaft 5' vom freien Ende 6 des Werkzeughalterkörpers 2 her in die Aufnahmeöffnung 7 einsetzbar ist. Der Werkzeugschaft 5' besitzt einen Nenndurchmesser D. Der Spannabschnitt 4 ist in den hier beschriebenen Ausführungsbeispielen als Schrumpfspannabschnitt ausgebildet, welcher das Werkzeug 5 mittels einer Schrumpfpressung hält. Der Spannabschnitt 4 weist von seinem freien Ende 6 her eine Aufnahmeöffnung 7 auf. Die Aufnahmeöffnung 7 ist im Wesentlichen als Aufnahmebohrung mit der axialen Längsmittelachse 3 als Bohrungsmittelachse ausbildet und erstreckt sich von einer Stirnseite 8 des Spannabschnitts 4 axial ein Stück in den Werkzeughalterkörper 2 hinein. Die Aufnahmeöffnung 7 weist eine Innenseite 9 auf, welche als Spannfläche für das zu haltende Werkzeug 5 wirkt. Die Aufnahmeöffnung 7 erstreckt sich in axialer Richtung des Werkzeughalterkörpers 2 durch den Spannabschnitt 4 hindurch und mündet in eine zentrale Übergangsbohrung 10, welche ihrerseits im weiteren Verlauf in Axialrichtung mit einer Kühlmittelzuführungseinrichtung 11 kommuniziert. Somit ist ein Strömungskanal für Kühlmittelflüssigkeit gebildet, welcher etwa zentral mittig durch den Werkzeughalterkörper 2 führt. Somit kann also Kühlmittelflüssigkeit, welche der Kühlmittelzuführeinrichtung 11 unter Druck zugeführt wird, über die Übergangsbohrung 10 und die Aufnahmeöffnung 7 zum freien Ende 6 des Werkzeughalterkörpers gelangen. Im Bereich des Spannabschnittes 4 sind als Kühlmittelleiteinrichtungen 12 Flachnuten 13 vorhanden, welche zusammen mit dem in der Aufnahmeöffnung 7 eingespannten Werkzeug 5 Strömungskanäle für Kühlflüssigkeit entlang des Werkzeugschaftes 5' innerhalb des Spannabschnitts 4 bilden. Die Flachnuten 13 erstrecken sich in axialer Richtung über den Spannabschnitt 4 hinweg bis zum freien Ende 6 des Werkzeughalterkörpers 2. Im Bereich des freien Endes 6 der Aufnahmeöffnung 7 ist eine Innenfase 14 angeordnet. Durch die Innenfase 14 ist die Aufnahmeöffnung 7 im Bereich des freien Endes 6 des Werkzeughalterkörpers 2 sich konisch erweiternd ausgebildet.

Im gezeigten Beispiel gemäß den Figuren 1 und la sind über den Umfang der Aufnahmeöffnung 7 regelmäßig verteilt drei Flachnuten 13 angeordnet. Die Flachnuten 13 haben einen Nutgrund 15 sowie jeweils Nutseitenwandabschnitte 16. Der Nutgrund 15 der Flachnuten 13 ist im Querschnitt gewölbt ausgebildet und besitzt besonders bevorzugt die Raumform einer Zylindersegmentfläche. Die Zylindersegmentfläche ist dabei konzentrisch zur axialen Längsmittelachse 3 ausgebildet.

Die Flachnuten 13 besitzen eine Nuttiefe t und eine Nutbreite b. Die Breite b der Flachnuten ist erfindungsgemäß größer als die Tiefe t der Flachnuten gewählt und ist in besonders bevorzugter Weise wesentlich größer als die Tiefe t ausgebildet. Das Verhältnis der Nutbreite b zur Nuttiefe t der Flachnuten 13 ist größer als 1:1 und beträgt maximal 25:1. Ein bevorzugter Bereich für dieses Verhältnis ist der Bereich zwischen 2:1 und 15:1. Besonders bevorzugt ist ein Verhältnisbereich zwischen 2:1 und 10:1. Die Tiefe t der Flachnuten 13 beträgt 0,5 % bis 15 %, insbesondere 1 % bis 10 % des Werkzeugnenndurchmessers D.

Ein Übergang zwischen dem Nutgrund 15 und den Nutseitenwandabschnitten 16 ist verrundet ausgebildet, was eine exakte und saubere Strahlführung fördert.

Die Flachnuten 13 bilden zusammen mit einem eingesetzten Werkzeug 5 jeweils im Querschnitt ein Ringspaltsegment 17. Durch dieses Ringspaltsegment 17 kann Kühlflüssigkeit im Bereich des freien Endes 6 des Werkzeughalterkörpers 2 direkt am Schaft 5' des Werkzeugs 5 anliegend ins Freie austreten.

Abweichend von der Darstellung gemäß den Figuren 1 und la können die Flachnuten 13 über den Umfang der Innenseite 9 der Aufnahmeöffnung 7 auch ungleichmäßig verteilt sein. Hierdurch ergeben sich unterschiedliche Flächenausdehnungen für die als Spannflächen wirkenden Abschnitte der Innenseite 9. Es konnte beobachtet werden, dass das eingespannte Werkzeug 5 im Betrieb eine geringere Schwingungsanregung erfährt, wenn der Wechsel zwischen Spannflächen und Flachnuten 13 unregelmäßig erfolgt. Dies stellt insbesondere bei hohen Drehzahlen des Werkzeuges 5 einen erheblichen Vorteil dar und hebt die Zerspanungsqualität. Eine weitere Maßnahme zur Verringerung der Schwingungsanregung des Werkzeugs 5 ist, die Breite b der Flachnuten 13 unterschiedlich auszubilden, so dass breitere und weniger breitere Flachnuten 13 vorhanden sind.

Erfindungswesentlich ist, dass die Flachnuten jedenfalls breiter als tief sind, so dass ein in Radialrichtung möglichst dünner und in Tangentialrichtung möglichst breiter Strahl am Austritt im Bereich der Stirnseite 8 gebildet ist. Ein solcher dünner und breiter Strahl haftet auch bei hohen Drehzahlen besser am Werkzeug und schmiegt sich diesem besser an. Hierdurch ist auch bei hohen Drehzahlen die Strahlzerstäubung und die Strahlaufpilzung wesentlich reduziert, so dass auch bei einem längeren Werkzeug 5 Kühlmittel zuverlässig zum Schneidebereich des Werkzeugs 5 geleitet werden kann.

In bevorzugter Art und Weise ist die Tiefe t der Flachnuten 13 derart zur Innenfase 14 abgestimmt, dass der größere, der Stirnseite 8 zugewandte Durchmesser der Innenfase 14 etwa um die doppelte Tiefe t größer ist als der Nominaldurchmesser der Aufnahmeöffnung 7. Hierdurch wird erreicht, dass die Flachnuten 13 direkt an der Stirnseite 8 in Längsrichtung der Werkzeughaltervorrichtung 2 stufenlos auslaufen. Dies bewirkt eine besonders gute Strahlführung und Strahlbildung und reduziert die Strahlzerstäubung nach dem Verlassen des Werkzeughalterkörpers 2.

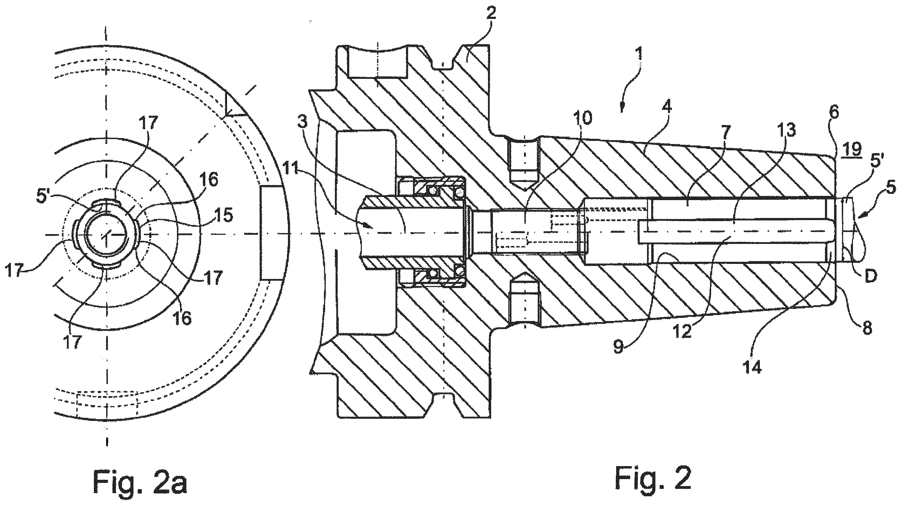

Ein zweites Ausführungsbeispiel einer nicht erfindungsgemäßen Werkzeughaltervorrichtung 1 ist in den Figuren 2, 2a gezeigt. Diese Ausführungsform dieser erfindungsgemäßen Werkzeughaltervorrichtung 1 entspricht im Wesentlichen der Ausführungsform gemäß den Figuren 1, la, so dass gleiche Elemente mit gleichen Bezugszeichen versehen sind. Die Ausführungsform gemäß den Figuren 2, 2a unterscheidet sich lediglich in der Anzahl der Flachnuten 13, welche über den Umfang der Innenseite 9 verteilt vorgesehen sind. Im vorliegenden Beispiel gemäß den Figuren 2, 2a sind hier 4 Flachnuten gezeigt. Die übrigen im Zusammenhang mit den Figuren 1, la beschriebenen Merkmale und Funktionen der Werkzeughaltervorrichtung sind selbstverständlich auch für das Ausführungsbeispiel gemäß den Figuren 2, 2a gültig.

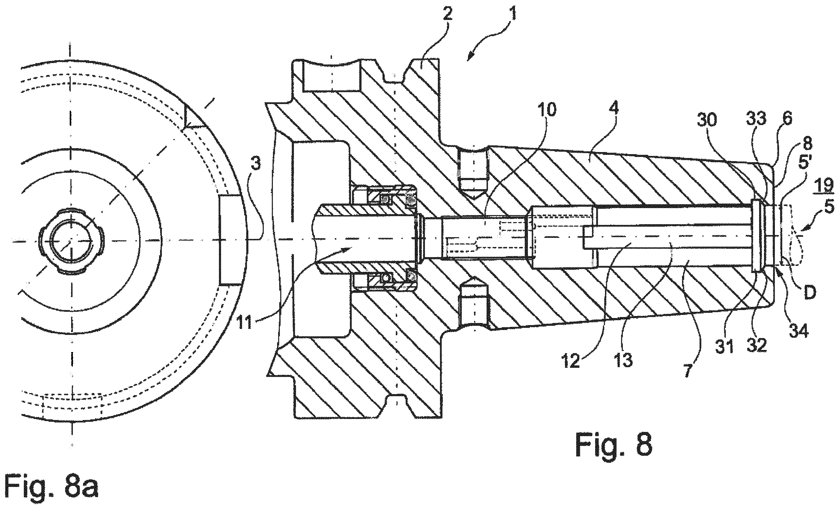

Gemäß einer weiteren, nicht erfindungsgemäßen Ausführungsform der Werkzeughaltervorrichtung 1 (Figuren 8, 8a) ist ein Kühlmittelstau- und/oder Sammelraum 30 vorgesehen, in der die Kühlmittelleiteinrichtungen 12, welche als Flachnuten 13 ausgebildet sind, münden. Der Stau- und/oder Sammelraum 30 sitzt innerhalb des Werkzeughalterkörpers 2 und wird durch eine umlaufende Ringnut 31 gebildet, welche sich von der Aufnahmeöffnung ein Stück radial nach außen erstreckt. In Längsrichtung des Werkzeughalterkörpers 2 gesehen sitzt der Stau- und/oder Sammelraum 30 im Bereich des äußersten Endbereiches des freien Endes 6. Der Stau- und/oder Sammelraum 30 ist lediglich durch einen Ringbegrenzungssteg 32 von der freien Stirnseite 8 getrennt. Der Stau- und/oder Sammelraum 30 geht mittels einer konisch sich verjüngenden Begrenzungswandung 33 in den Ringsteg 32 über. Der Ringbegrenzungssteg 32 bildet zusammen mit dem eingespannten Werkzeug 5 einen engen Ringspalt 34. Der Innendurchmesser des Ringbegrenzungsstegs 32 ist geringfügig größer als der Außendurchmesser D des Werkzeugschaftes 5'. Hierdurch wird der sehr schmale, den Werkzeugschaft 5' vollständig umgebende Ringspalt 34 gebildet, durch welchen zwischen dem Werkzeugschaft 5' und dem Ringsteg Kühlmittel aus dem Stau- und/oder Sammelraum 30 in die Umgebung austreten kann. Hierdurch wird insbesondere ein geschlossener Kühlmittelmantel, welcher von der Stirnseite 8 weg den Schaft 5' vollständig umgibt, erzeugt. Der Stau und/oder Sammelraum 30 dient zur Vereinigung der einzelnen Kühlmittelströme, welche durch die Flachnuten 13 in den Stau und/oder Sammelraum 30 gelangen. Besonders vorteilhaft ist die Anordnung des Stau- und/oder Sammelraumes 30 innerhalb des Werkzeughalterkörpers 2, da hierdurch zum einen eine besonders einfache, insbesondere einstückige Herstellung des Werkzeughalterkörpers 2 ermöglicht ist und zum anderen der Stau- und/oder Sammelraum 30 keine Störkonturen außerhalb der Außenkontur des Werkzeughalterkörpers 2 bildet. Hierdurch ist eine besonders gute Ausnutzung des eingespannten Werkzeuges 5 möglich. Insbesondere durch das Vorsehen von Flachnuten 13 im Sinne der Erfindung als Kühlmittelleiteinrichtungen 12 zur Versorgung des Stau- und/oder Sammelraums 30 mit Kühlflüssigkeit, kann dieser vom Volumen her klein gehalten werden, da aufgrund der breitspurigen Zuführung des Kühlmittels nur wenig Volumen notwendig ist, um eine zuverlässige Vereinigung und Verwirbelung der einzelnen Kühlmittelströme aus den Flachnuten 13 zu bewirken. Hierdurch kann die Nuttiefe der Ringnut 31 gering gehalten werden. Somit kann eine Schwächung des Werkzeughalterkörpers 2 in seinem freien Endbereich 6 klein gehalten werden. Es genügt lediglich ein radial gering bemessener Einstich in Form einer Ringnut 31 zur Ausbildung eines ausreichend großen Stau- und/oder Sammelraums 30.

Abgesehen von den oben beschriebenen Details unterscheidet sich die Ausführungsform dieser Werkzeughaltervorrichtung 1 nicht weiter von der Ausführungsform gemäß den Figuren 2, 2a.

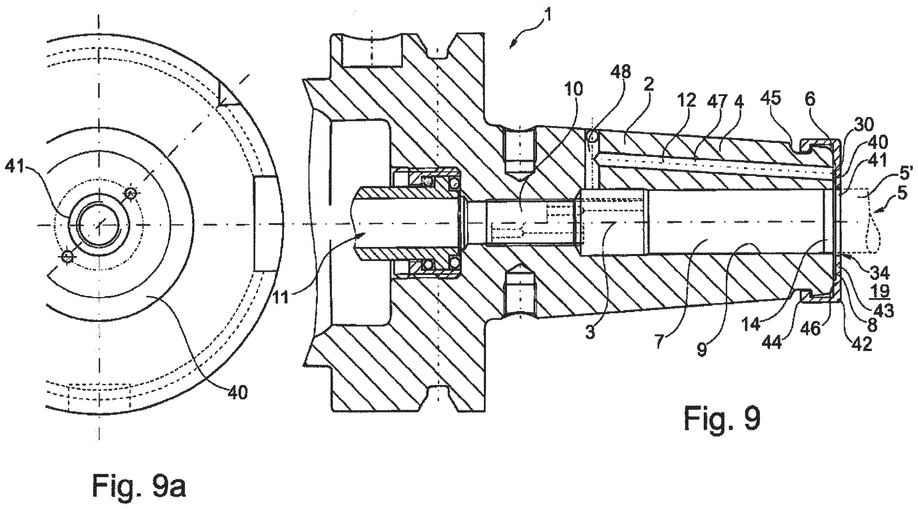

Bei einer weiteren, nicht erfindungsgemäßen Ausführungsform der Werkzeughaltervorrichtung 1 gemäß den Figuren 9, 9a ist der Stau- und/oder Sammelraum 30 außerhalb des Werkzeughalterkörpers 2 angeordnet und wird zum einen von der Stirnseite des Werkzeughalterkörpers vom Werkzeugschaft 5' und zum anderen von einem Deckelelement 40 begrenzt. Der Stau- und/oder Sammelraum 30 ist somit in axialer Längsrichtung auf die Stirnseite 8 des freien Endes 6 des Werkzeughalterkörpers 2 folgend außerhalb des Werkzeughalterkörpers 2 angeordnet.

Das Deckelelement 40 ist beispielsweise als Kappe 42 ausgebildet. Die Kappe 42 besitzt einen Kappenboden 43, in dem eine Austrittsöffnung 41 eingebracht ist. Die Austrittsöffnung 41 bildet zusammen mit dem Werkzeugschaft 5' des Werkzeuges 5 den Ringspalt 34. Die Kappe 42 umgreift das freie Ende 6 des Werkzeughalterkörpers 2 außenumfänglich und greift mittels einer Schnappeinrichtung 44, welche beispielsweise als durchgängiger Schnappring oder als eine Vielzahl von Schnapplappen ausgebildet sein kann, in eine Außenumfangsnut 45, welche im Bereich des Spannabschnitts 4 angeordnet ist, schnappend ein und legt somit das Deckelelement 40 relativ zum Werkzeughalterkörper 2 sowohl in axialer als auch in radialer Richtung fest. Im Bereich des Kappenbodens 43 ist bevorzugt ein Ringsteg 46 vorgesehen, welcher sich in Längsrichtung ein Stück vom Kappenboden 43 zur Stirnseite 8 erstreckt und mit dieser dichtend zusammenwirkt. Hierdurch ist ein Ringspalt von geringer axialer Länge gebildet, welcher den Stau- und/oder Sammelraum 30 bildet.

Alternativ zu den bisher beschriebenen Flachnuten als Kühlmittelleiteinrichtung 12 ist bei dieser Ausführungsform als Kühlmittelleiteinrichtung 12 ein Kanal 47 vorgesehen, welcher sich von einer Querbohrung 48 im Werkzeughalterkörper 2 bis zur freien Stirnseite 8 erstreckt und dort im Stau- und/oder Sammelraum 30 mündet. Die Querbohrung 48 steht mit der Übergangsbohrung 10 in Verbindung, so dass über die Kühlmittelzuführeinrichtung 11, die Querbohrung 48 und den Kanal 47 der Stau- und/oder Sammelraum 30 mit Kühlmittel beschickbar ist. Bei dieser Ausgestaltung können die Flachnuten 13 entfallen.

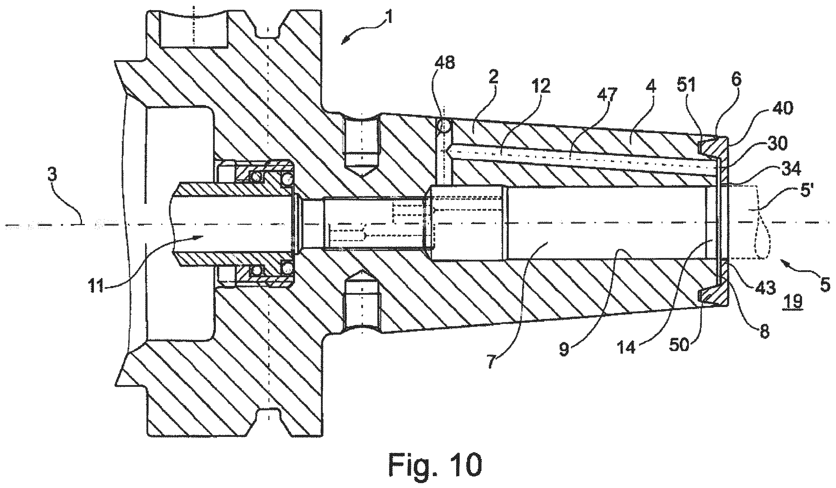

Ein weiteres Ausführungsbeispiel einer nicht erfindungsgemäßen Werkzeughaltervorrichtung 1 ist in Figur 10 schematisch dargestellt. Dieses Ausführungsbeispiel ist im Wesentlichen ähnlich zum Ausführungsbeispiel gemäß den Figuren 9 und 9a ausgebildet. Lediglich das Deckelelement 40 ist hinsichtlich seiner Befestigung am Werkzeughalterkörper unterschiedlich ausgebildet.

Damit das Deckelelement 40 bei dieser Ausführungsform nicht über eine Außenumfangskontur des Werkzeughalterkörpers 2 übersteht, verfügt das Deckelelement 40 über Befestigungseinrichtungen 50, welche mit stirnseitigen Gegenbefestigungseinrichtungen 51 zusammenwirken.

Die Befestigungseinrichtung 50 kann beispielsweise als umlaufender Ringsteg ausgebildet sein, welcher mittels Presssitz in der Gegenbefestigungseinrichtung 51, welche beispielsweise als umlaufende Ringnut in der Stirnseite 8 des Werkzeughalterkörpers ausgebildet ist, zusammenwirkt. Im Übrigen ist die Ausführungsform gemäß Figur 10, insbesondere was die Ausgestaltung der Kühlmittelleiteinrichtungen 12 und die Bildung des Stau- und/oder Sammelraums 30 sowie des Ringsspalts 34 angeht, vergleichbar mit der Ausführungsform gemäß den Figuren 9, 9a.

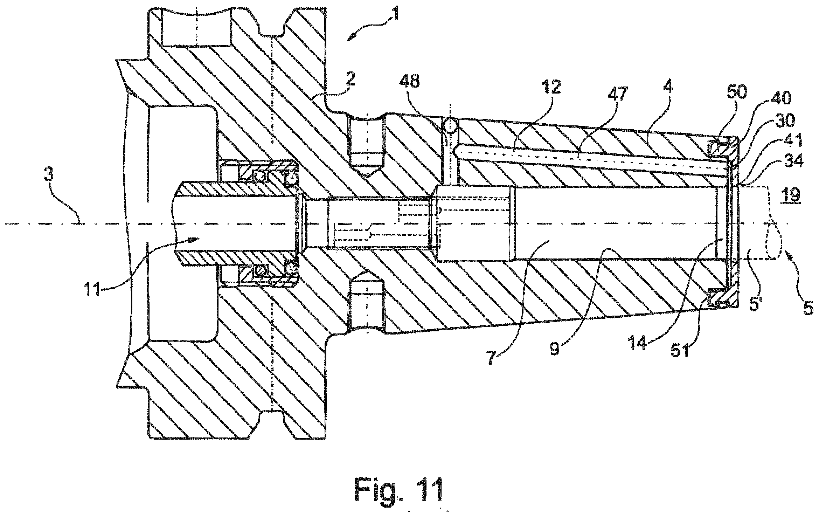

In einer weiteren, nicht erfindungsgemäßen Ausführungsform der erfindungsgemäßen Werkzeughaltervorrichtung 1 gemäß Figur 11 sind die Befestigungseinrichtungen 50 und die Gegenbefestigungseinrichtungen 51 als Schnapp- und Gegenschnappeinrichtungen ausgebildet, wobei hierbei, wie auch bei der Ausführungsform gemäß Figur 10, besonders vorteilhaft ist, dass das Deckelelement 40 keinen radialen Überstand über die Außenkontur des Werkzeughalterkörpers 2 besitzt.

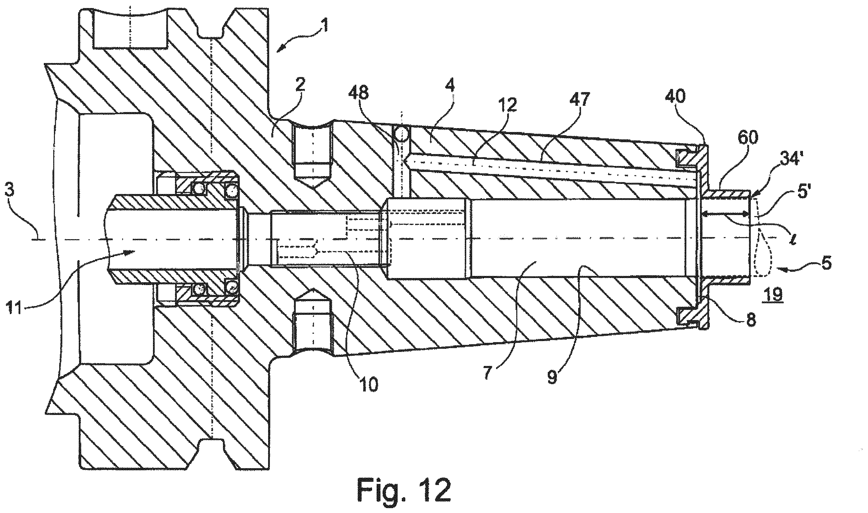

Die Ausführungsform gemäß Figur 12 entspricht im Wesentlichen der Ausführungsform gemäß Figur 11, wobei das Deckelelement zusätzlich einen Strahlformkragen 60 aufweist, der sich axial vom Deckelelement 40 von der Stirnseite 8 ein Stück weg erstreckt. Der Strahlformkragen 60 besitzt eine wirksame Länge 1 und umgibt den Werkzeugschaft 5' unter Bildung eines Strahlformringkanals 34' der Länge l.

Bevorzugt beträgt das Verhältnis der axialen Länge l des Strahlformringkanals 34' zum Werkzeugschaftdurchmesser D zwischen 0,2:1 und 1:1, liegt insbesondere im Bereich zwischen 0,3:1 und 0,8:1 und besonders bevorzugt im Bereich von 0,4:1 bis 0,7:1.

Durch das Vorsehen eines Strahlformringkanals 34', gebildet durch einen Strahlformkragen 60, gelingt eine besonders gleichmäßige Ausgestaltung des Kühlmittelmantels um den Werkzeugschaft 5'. Auch die Tendenz des Kühlmittelmantels zum Aufpilzen nachdem das Kühlmittel den Strahlformringkanal 34' verlassen hat, ist verringert.

Die angegebenen Verhältnisbereiche zwischen der axialen Länge 1 des Strahlformringkanals 34' und dem Werkzeugschaftdurchmesser D stellen einen guten Kompromiss zwischen guter Strahlqualität und einer noch akzeptablen Veränderung der Außenkontur des Werkzeughalterkörpers 2 dar, damit eine noch möglichst optimale Werkzeugausnutzung ohne die Gefahr von Kollisionen bei der Programmierung von z.B. Fräsprogrammen herrscht.

Selbstverständlich ist der Gedanke des Vorsehens eines Strahlformkragens 60 ohne weiteres auf die Ausführungsformen der Werkzeughaltervorrichtung 1 insbesondere gemäß den Figuren 9, 9a, 10, 11 und auch auf die nachfolgend beschriebenen Ausführungsvarianten übertragbar. Lediglich zum Zwecke der Verdeutlichung wurde der Strahlformkragen 60 anhand eines Deckelelements 40 mit Befestigungseinrichtungen 50, 51 nach der Ausführungsform gemäß Figur 11 dargestellt.

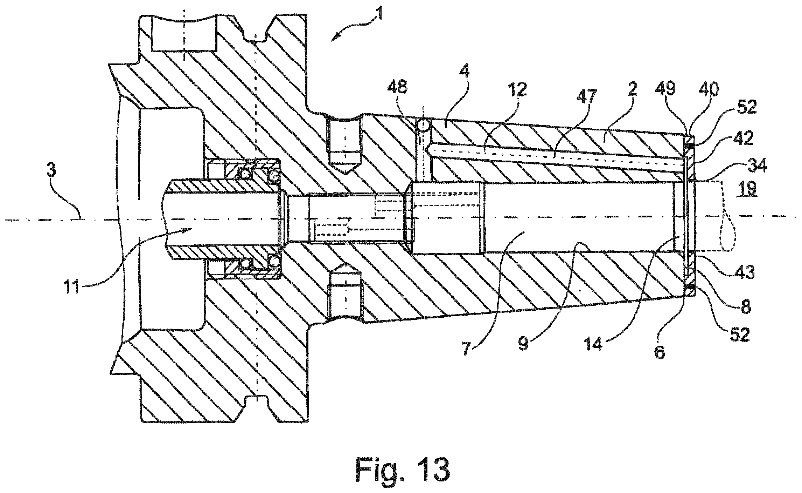

In einer weiteren Ausführungsform einer nicht erfindungsgemäßen Werkzeughaltervorrichtung 1 (Fig. 13) ist das Deckelelement 40 ebenfalls als Kappe 42 ausgebildet. Die Kappe 42 besitzt randlich umlaufend einen Verdickungswulst 49, damit der Kappenboden 43 axial beabstandet von der Stirnseite 8 angeordnet ist und so der Stau- und/oder Sammelraum 30 gebildet ist. Weiterhin besitzt die Kappe 42 gemäß dieser Ausführungsform zu ihrer Befestigung Bohrungen 52, durch die die Kappe 42 mit dem Werkzeughalterkörper 2 verschweißt ist. Selbstverständlich kann auch eine umlaufende Schweißnaht Verwendung finden. Im Übrigen entspricht die Ausführungsform gemäß Figur 13 den Ausführungsformen gemäß den Figuren 10 und 11. Selbstverständlich kann an die Kappe 42 ebenso ein Strahlformkragen, wie in Figur 12 beschrieben, angeformt sein.

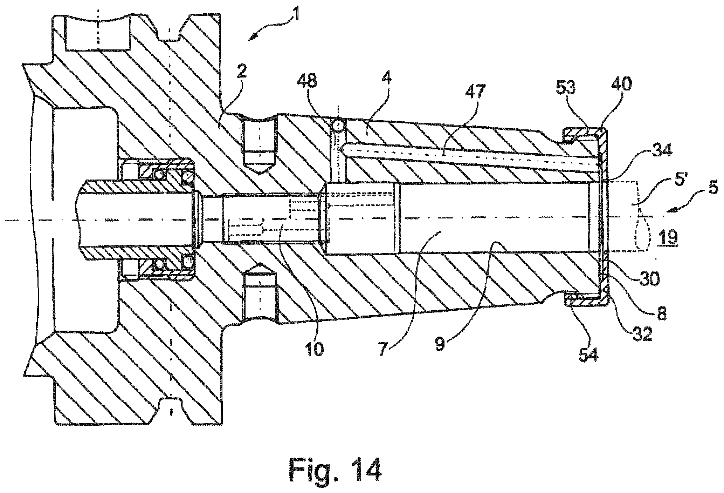

Bei der nicht erfindungsgemäßen Ausführungsform gemäß Figur 14 ist das Deckelelement 40 nach Art einer Überwurfmutter mit einem weiblichen Gewinde 53 ausgestaltet, welches mit einem männlichen Gewinde 54 am Werkzeughalterkörper 2 zusammenwirkt. Zur Abdichtung des Stau und/oder Sammelraumes 30 ist der Ringbegrenzungssteg 32 vorgesehen, der mit der Stirnseite 8 zusammenwirkt.

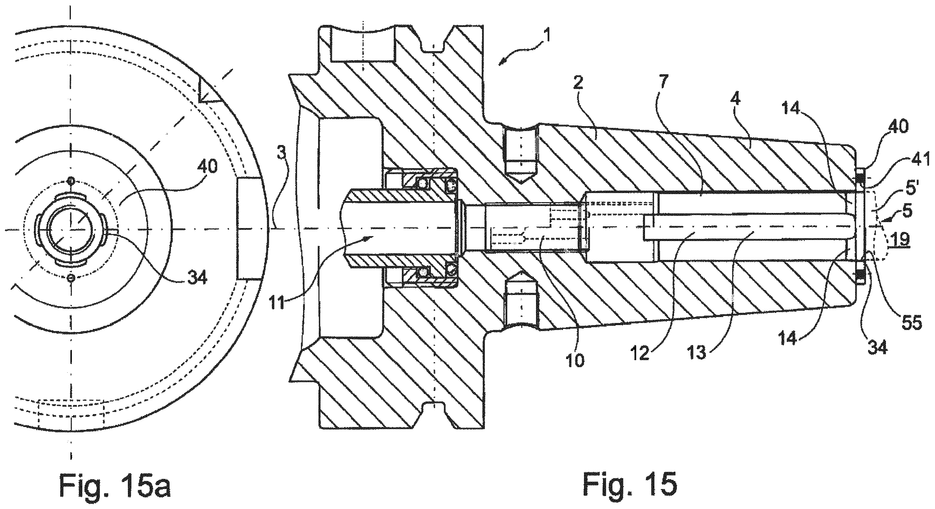

Die nachfolgend beschriebenen Ausführungsformen der Werkzeughaltervorrichtung 1 (Figuren 15 bis 21a) sind Ausführungsformen, bei denen der Stau- und/oder Sammelraum 30 innerhalb des Werkzeughalterkörpers 2 angeordnet ist und radial im Wesentlichen von der Innenfase 14 begrenzt ist.

Das bedeutet, dass ein wesentlicher Anteil des Volumens des Stau- und/oder Sammelraums 30 innerhalb der konischen Erweiterung der Aufnahmeöffnung 7 im Bereich der Innenfase 14 durch die Innenfase 14 gebildet ist. Im Unterschied hierzu ist der Stau- und/oder Sammelraum 30 gemäß der Ausführungsform nach Figur 8 im Wesentlichen durch die Ringnut 31 gebildet. Bei den Ausführungsformen nach den Figuren 9 bis 14 ist der wesentlich größte Teil des Volumens des Stau- und/oder Sammelraums 30 durch die Stirnseite 8 des Werkzeughalterkörpers und das Deckelelement 40 begrenzt. Die Stau- und/oder Sammelräume 30 dieser Ausführungsform liegen somit mit ihrem wesentlichen Volumen außerhalb des Werkzeughalterkörpers 2.

Bei einer ersten, nicht erfindungsgemäßen Ausführungsform dieses Typs (Fig. 15) der Werkzeughaltervorrichtung 1 ist auf der Stirnseite 8 des Werkzeughalterkörpers 2 das Deckelelement 40 mittels Schweißung aufgesetzt. Das Deckelelement 40 ist nach Art einer planen Lochscheibe ausgebildet und weist die Austrittsöffnung 41 auf. Die Innenfase 14 ist hinsichtlich ihrer Neigung derart abgestimmt, dass der größte Durchmesser direkt benachbart zur Stirnseite 8 angeordnet ist und dieser Durchmesser etwas größer ist als der Innendurchmesser der Austrittsöffnung 41, so dass eine Ringkante 55 des Deckelelements ein Stück radial in den gefasten Bereich der Aufnahmebohrung 7 hineinragt und somit für Kühlmittelflüssigkeit, welche sich im Bereich der Innenfase 14 befindet, eine Staukante oder Sammelkante bildet. Der Innendurchmesser der Austrittsöffnung 41 ist im Übrigen relativ zum Werkzeugschaft 5' des Werkzeuges 5 so ausgebildet wie vorbeschrieben. Hierdurch ist wiederum die Ausbildung des Ringspaltes 34 in bereits vorbeschriebener Art und Weise sichergestellt.

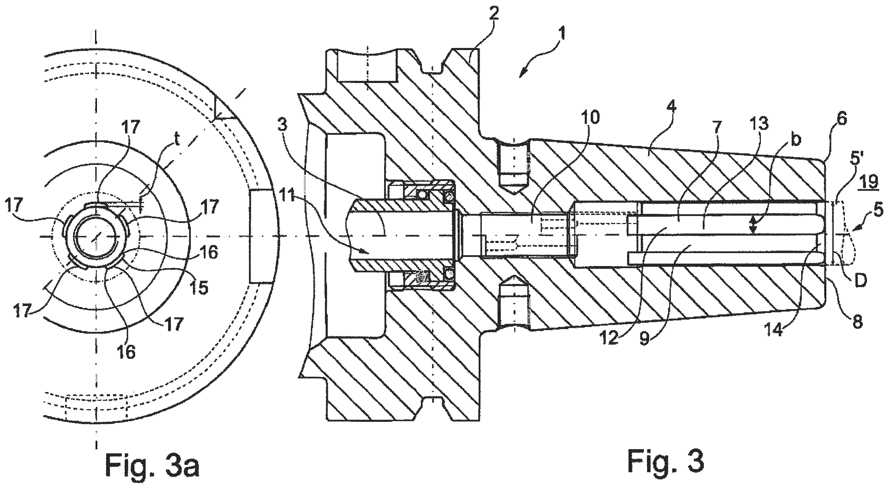

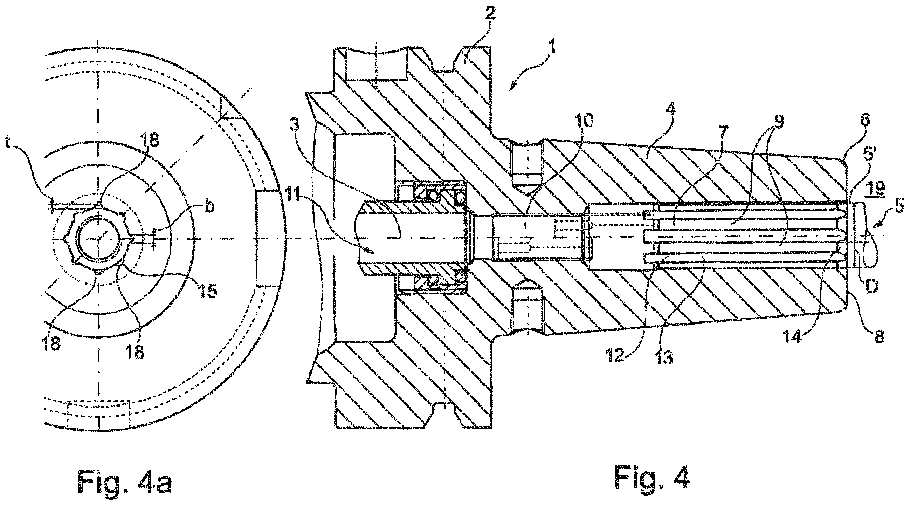

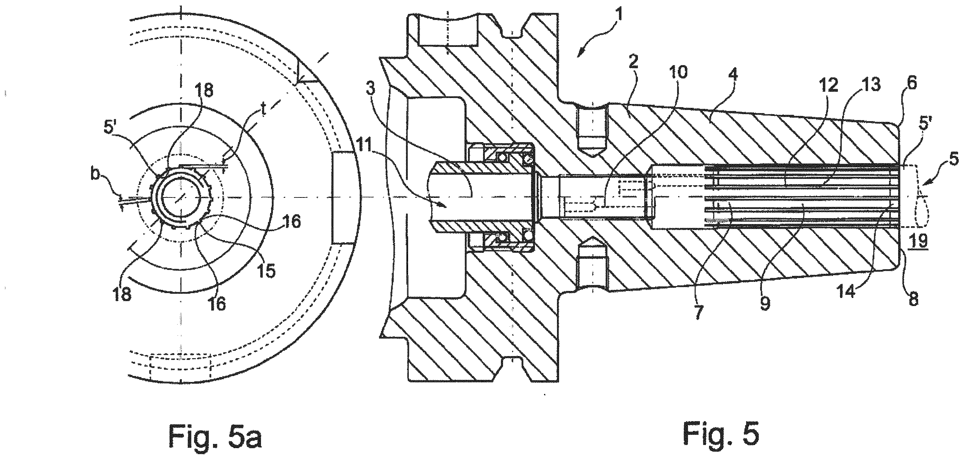

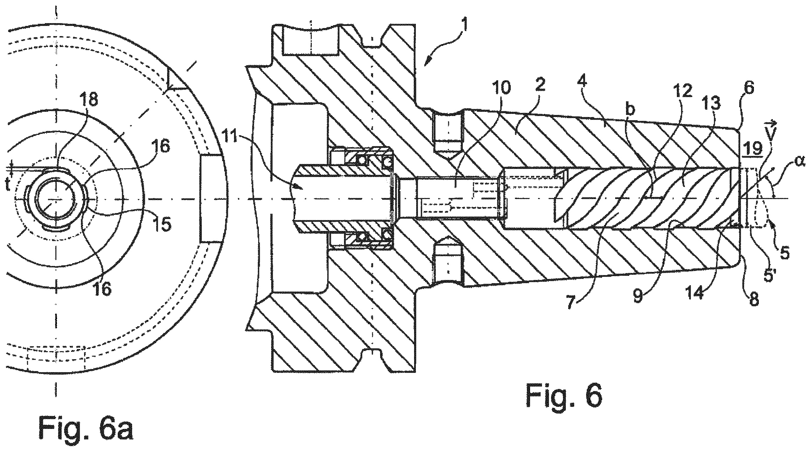

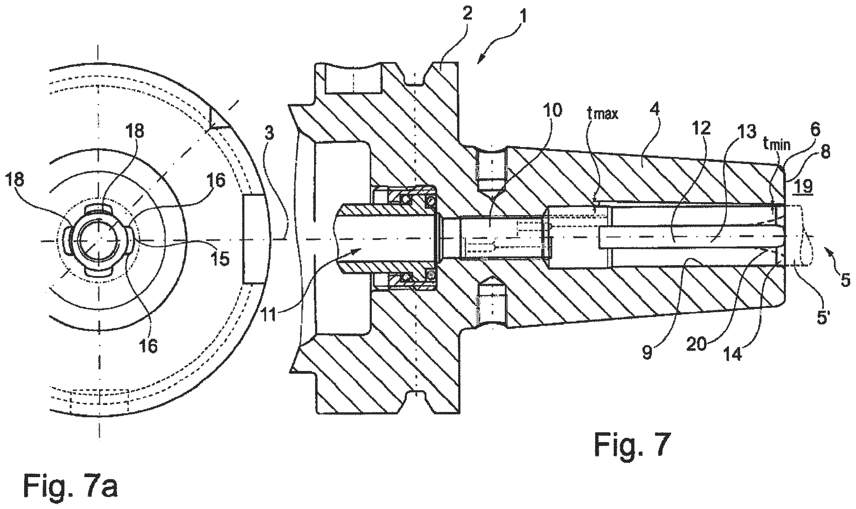

Diese Ausführungsform hat den besonderen Vorteil, dass das Deckelelement nur in sehr geringem Maße axial über die Außenkontur des Werkzeughalterkörpers übersteht und somit das Werkzeug 4 nahezu in seiner vollen Länge nutzbar bleibt. Gleichwohl ist durch die Innenfase 14 und das Deckelelement 40 wirksam ein Stau- und/oder Sammelraum 30 ausgebildet, der über die Flachnuten 13 mit Kühlmittelflüssigkeit versorgt wird. Diese Ausführungsform ist besonders einfach herstellbar und es ist insbesondere möglich, eine Ausführungsform gemäß den Figuren 1 bis 7 in einfacher Art und Weise nachträglich mit einem Stau- und/oder Sammelraum 30 auszustatten. Hierdurch kann ein gutes Ergebnis erzielt werden, was die Strahlformung und den geschlossenen Kühlmittelmantel um das Werkzeug 5 herum angeht.

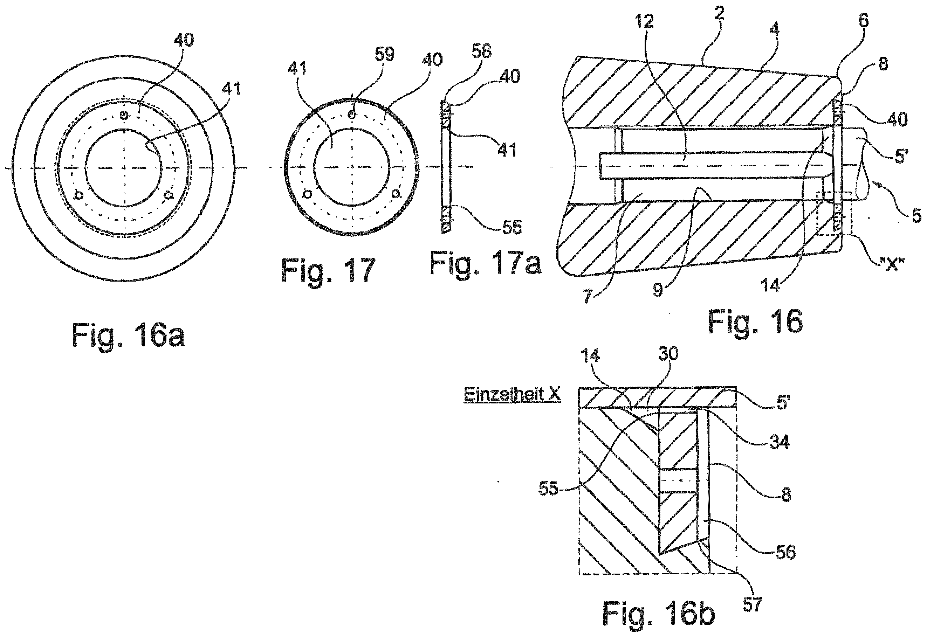

Bei einer weiteren, vollständig erfindungsgemäßen Ausführungsform der Werkzeughaltervorrichtung 1 ist in der Stirnseite 8 des Werkzeughalterkörpers 2 eine Flachvertiefung 56 vorhanden, in der das Deckelelement 40 versenkt sitzt. Hierdurch ist die Außenkontur des Werkzeughalterkörpers 2 durch das Deckelelement 40 nicht verändert (vergleiche Figuren 16, 16a, 16b).

Die Flachvertiefung 56 ist im Querschnitt im Wesentlichen trapezförmig ausgebildet und verjüngt sich zur Stirnseite 8 hin, so dass eine Hinterschnittkante 57 ausgebildet ist. Korrespondierend hierzu ist das Deckelelement 40 (Figuren 17, 17a) nach Art einer planen Lochscheibe ausgebildet und besitzt eine angefaste Außenkante 58, welche mit dem Hinterschnitt der Flachvertiefung 56 korrespondiert. Das Deckelelement besitzt die Austrittsöffnung 41, so dass zwischen dem Werkzeugschaft 5' und der Austrittsöffnung 41 der Ringspalt 34 ausgebildet ist. Eine Stau- und/oder Sammelkante 55 begrenzt zusammen mit der Innenfase 14 den Stau- und/oder Sammelraum 30. Zur Montage des Deckelelements 40 dieser Ausführungsform wird das Deckelelement 40 federnd nach Art einer Tellerfeder gewölbt und im gewölbten Zustand an der Hinterschnittkante 57 vorbei in die Flachvertiefung 56 eingesetzt. Danach kann die federnde Vorspannung gelöst werden, so dass das Deckelelement 40 gegebenenfalls mit einer Restfedervorspannung vorgespannt in der Vertiefung 56 sitzt und somit sowohl radial als auch axial festgelegt ist. Zweckmäßigerweise weist das Deckelelement 40 über den Umfang verteilt Montagebohrungen 59 auf, in welche Stifte einsetzbar sind, mittels denen die federnde Vorspannung und federnde Wölbung durch radiales Zusammenführen der Stifte erzeugt werden kann.

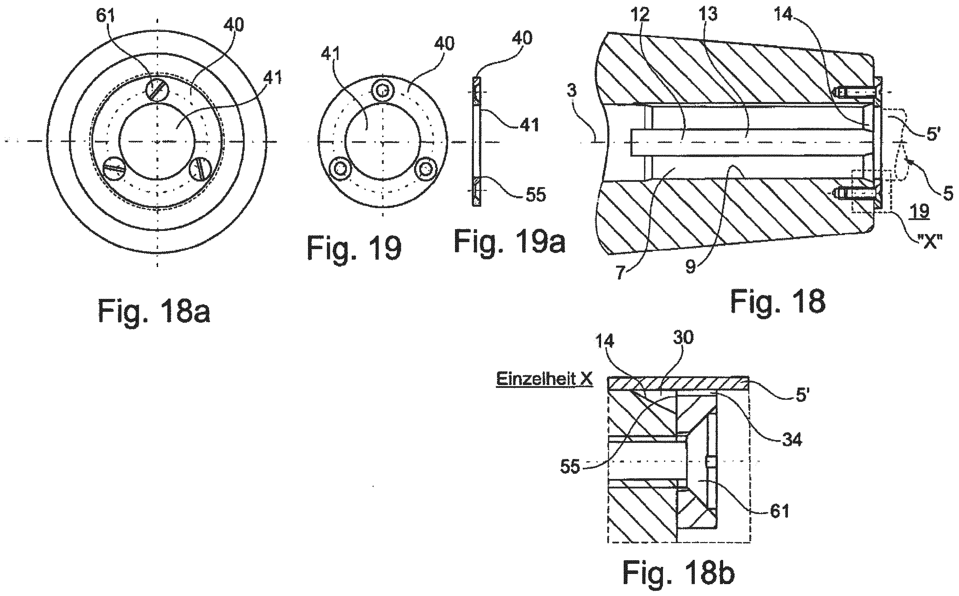

Eine weitere, nicht erfindungsgemäße Ausführungsform der erfindungsgemäßen Werkzeughaltervorrichtung 1 gemäß den Figuren 18, 18a, 18b sowie 19 und 19a entspricht im Wesentlichen der Ausführungsform gemäß den Figuren 15 und 15a, wobei das Deckelelement mittels einer Schraubverbindung an der Stirnseite 8 des Werkzeughalterkörpers 2 befestigt ist. Bei dieser Ausführungsform ist am Deckelelement 40 ebenfalls eine Stau- und/oder Sammelkante 55 vorhanden, welche den Stau- und/oder Sammelraum 30 mit begrenzt. Zwischen dem Werkzeugschaft 5' und dem Deckelelement ist ein Ringspalt 34 gebildet.

Die Schraubverbindung ist bevorzugt mittels Senkkopfschrauben 61 ausgebildet, da diese bündig mit einer Außenseite der Lochscheibe abschließen und somit eine Störkontur verhindert ist.

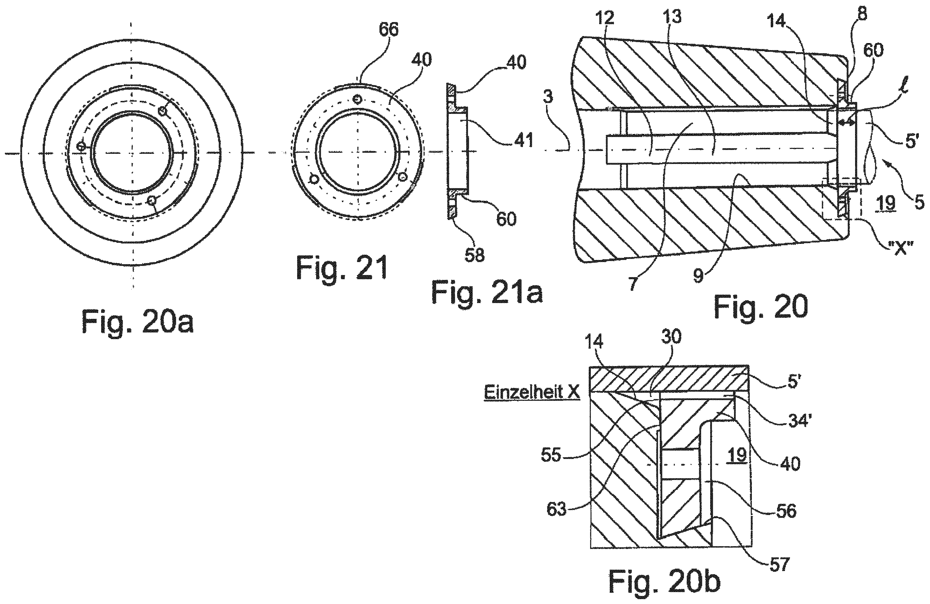

Eine weitere, nicht erfindungsgemäße Ausführungsform der Werkzeughaltervorrichtung 1 gemäß den Figuren 20 bis 21a besitzt stirnseitig ebenfalls eine Flachvertiefung 56, in der das Deckelelement 40 befestigt sitzt. Im Unterschied zum Deckelelement 40 gemäß der Ausführungsform nach den Figuren 16 bis 17a, besitzt das Deckelelement dieser Ausführungsform einen Strahlformkragen 60, dessen axiale Längserstreckung 1 derart gewählt ist, dass der Strahlformkragen 60 ein Stück über die Stirnseite 8 des Werkzeughalterkörpers 2 übersteht. Das Deckelelement 40 besitzt ebenfalls eine Stau- und/oder Sammelkante 55 zur Begrenzung des Stau- und/oder Sammelraumes 30, der radial von der Innenfase 14 begrenzt ist. Das Deckelelement 40 besitzt die Austrittsöffnung 41, so dass ein Strahlformkanal 34' gebildet ist. Im Bereich des Grundes der Flachausnehmung 56 ist zur Aufnahmeöffnung 7 hin diese umgebend ein Ringwulst 63 vorgesehen, auf dem das Deckelelement 40 in axialer Richtung aufsitzt.

Die Flachvertiefung besitzt die Hinterschnittkante 57. Zusätzlich hierzu ist das Deckelelement 40 mit Verriegelungslappen 66 versehen. Die Flachvertiefung und das Deckelelement 40 sind somit nach Art eines Drehbajonettverschlusses verbindbar.

Mit der vorliegenden Erfindung wird eine Vielzahl von Möglichkeiten zur Strahlbeeinflussung und zur Kühlmittelführung aufgezeigt, mit denen es gelingt, einen geschlossenen oder im Wesentlichen geschlossenen Kühlmittelmantel um ein Zerspanungswerkzeug, welches in der Werkzeughaltervorrichtung gehalten ist, auszubilden.

Für den Fachmann ist klar, dass singulär anhand einzelner Ausführungsbeispiele beschriebene Merkmale ohne weiteres auf andere Ausführungsbeispiele übertragbar oder mit Merkmalen der anderen Ausführungsbeispiele kombinierbar sind. Ebenso ist es für den Fachmann klar ersichtlich, dass die im Rahmen der Ausführungsbeispiele genauer beschriebenen Merkmale, welche anhand eines Schrumpffutters beschrieben worden sind, ebenso auf ein Flächenspannfutter nach Art einer Weldon- oder Wistle-Notch-Aufnahme übertragbar oder mit deren typischen Ausgestaltungsmerkmalen kombinierbar sind. Gleiches gilt für die Übertragung der beschriebenen Merkmale auf Spannzangenaufnahmen, wie z. B. ER-Spannzangenaufnahmen, OZ-Spannzangenaufnahmen oder Hochgenauigkeits-Spannzangenaufnahmen.

### Bezugszeichenliste:

- 1: Werkzeughaltervorrichtung
- 2: Werkzeughalterkörper
- 3: axiale Längsmittelachse
- 4: Spannabschnitt
- 5: Werkzeug
- 5': Werkzeugschaft
- 6: freies Ende
- 7: Aufnahmeöffnung
- 8: Stirnseite
- 9: Innenseite
- 10: Übergangsbohrung
- 11: Kühlmittelzuführeinrichtung
- 12: Kühlmittelleiteinrichtung
- 13: Flachnuten
- 14: Innenfase
- 15: Nutgrund
- 16: Nutseitenwandabschnitt
- 17: Ringspaltsegment
- 18: Strömungskanäle
- 19: Umgebung
- 20: gestrichelte Linie
- 30: Stau- und/oder Sammelraum
- 31: Ringnut
- 32: Ringbegrenzungssteg
- 33: Begrenzungswandung
- 34: Ringspalt
- 34': Strahlformringkanal
- 40: Deckelelement
- 41: Austrittsöffnung
- 42: Kappe
- 43: Kappenboden
- 44: Schnappeinrichtung
- 45: Außenumfangsnut
- 46: Ringsteg
- 47: Kanal
- 48: Querbohrung
- 49: Verdickungswulst
- 50: Befestigungseinrichtung
- 51: Gegenbefestigungseinrichtung
- 52: Bohrung
- 53: weibliches Gewinde
- 54: männliches Gewinde
- 55: Stau- und/oder Sammelkante
- 56: Flachvertiefung
- 57: Hinterschnittkante
- 58: Außenkante
- 59: Montagebohrung
- 60: Strahlformkragen
- 61: Senkkopfschraube
- 63: Ringwulst
- 66: Verriegelungslappen
- v: Tangentialgeschwindigkeit
- α: Winkel
- b: Breite
- t: Tiefe
- 1: Länge
- D: Nenndurchmesser/Außendurchmesser

## Patentansprüche

1. Werkzeughaltervorrichtung mit einem Werkzeughalterkörper (2) zum drehfesten Halten eines Rotationswerkzeugs (5) mit einem Schaft (5') mit einem Spannabschnitt (4) und einer Aufnahmeöffnung (7) für den Schaft (5') des Werkzeuges (5), mit einer Kühlmittelzuführungseinrichtung für unter Druck stehendes Kühlmittel, zumindest einer Kühlmittelleiteinrichtung (12) zum Leiten des Kühlmittels hin zum eingespannten Werkzeugschaft (5'), wobei im Bereich des freien Endes (6) des Werkzeughalterkörpers (2) ein Kühlmittelstau und/oder Sammelraum (30) vorhanden ist, in den die zumindest eine Kühlmittelleiteinrichtung (12) mündet und wobei der Kühlmittelstau und/oder Sammelraum (30) über einen Ringspalt (34) mit der Umgebung der Werkzeughaltervorrichtung (1) verbunden ist, wobei der Kühlmittelstau und/oder Sammelraum (30) und der Ringspalt (34) zumindest teilweise vom Werkzeugschaft (5') begrenzt ist, mit einem Deckelelement, das eine Lochscheibe ist und eine Austrittsöffnung (41) besitzt, welche zusammen mit dem Werkzeugschaft (5) den Ringspalt bildet, **dadurch gekennzeichnet, dass** die Lochscheibe in einer stirnseitigen Vertiefung des Werkzeughalterkörpers (2) sitzt.

2. Werkzeughaltervorrichtung nach einem der vorhergehenden Ansprüche, **dadurch gekennzeichnet, dass** der Stau- und/oder Sammelraum (30) innerhalb der Aufnahmeöffnung angeordnet ist und durch eine Innenfase (14) des Werkzeughalterkörpers (2) und ein Deckelelement (40) zumindest teilweise begrenzt ist.

3. Werkzeuhaltervorrichtung nach einem der vorhergehenden Ansprüche, **dadurch gekennzeichnet, dass** das Deckelelement (40) federnd vorgespannt in der Vertiefung sitzt.

4. Werkzeughaltervorrichtung nach einem der vorhergehenden Ansprüche, **dadurch gekennzeichnet, dass** das Deckelelement (40) randlich angefast ist und in einer korrespondierenden hinterschnittigen Vertiefung im Werkzeughalterkörper (2) sitzt.

5. Werkzeughaltervorrichtung nach einem der vorhergehenden Ansprüche, **dadurch gekennzeichnet, dass** das Deckelelement (40) mittels einer Drehbajonettverbindung in der stirnseitigen Vertiefung des Werkzeughalterkörpers (2) festgelegt ist.

6. Werkzeughaltervorrichtung nach einem der vorhergehenden Ansprüche, **dadurch gekennzeichnet, dass** das Deckelelement (40) mit der Stirnseite (8) des Werkzeughalterkörpers (2) verschweißt ist.

7. Werkzeughaltervorrichtung nach einem der vorhergehenden Ansprüche, **dadurch gekennzeichnet, dass** das Deckelelement (40) eine Austrittsöffnung (41) besitzt, welche zusammen mit dem Werkzeug den Ringspalt (34) bildet.

8. Werkzeughaltervorrichtung nach einem der vorhergehenden Ansprüche, **dadurch gekennzeichnet, dass** das Deckelelement (40) als Befestigungseinrichtung einen Halterring oder mehrere Haltebolzen aufweist, welche in korrespondierenden Gegenbefestigungseinrichtungen in der Stirnseite (8) des Werkzeughalterkörpers (2) sitzt/sitzen.

9. Werkzeughaltervorrichtung nach einem der vorangegangenen Ansprüche, **dadurch gekennzeichnet, dass** das Deckelelement (40) relativ zur Außenkontur des Werkzeughalterkörpers (2) radial zurückgesetzt ausgebildet ist.

10. Werkzeughaltervorrichtung nach einem der vorangegangenen Ansprüche, **dadurch gekennzeichnet, dass** das Deckelelement (40) einen Strahlformkragen aufweist, so dass ein Strahlformringkanal mit einer Länge gebildet ist.

11. Werkzeughaltervorrichtung nach Anspruch 10, **dadurch gekennzeichnet, dass** das Verhältnis der axialen Länge des Strahlformringkanals zum Werkzeugschaftdurchmesser im Bereich zwischen 0,2:1 und 1:1, insbesondere im Bereich zwischen 0,3:1 und 0,8:1, besonders bevorzugt im Bereich von 0,4:1 bis 0,7:1 liegt.

## Claims

1. Tool holder apparatus having a tool holder body (2) for holding, for conjoint rotation, a rotary tool (5) with a shank (5'), having a clamping portion (4) and a receiving opening (7) for the shank (5') of the tool (5), having a coolant feed device for pressurized coolant, at least one coolant conducting device (12) for conducting the coolant towards the clamped tool shank (5'), wherein a coolant storage and/or collecting chamber (30) is present in the region of the free end (6) of the tool holder body (2), at least one coolant conducting device (12) opening into said coolant storage and/or collecting chamber (30), and wherein the coolant storage and/or collecting chamber (30) is connected to the surroundings of the tool holder apparatus (1) via an annular gap (34), wherein the coolant storage and/or collecting chamber (30) and the annular gap (34) are delimited at least partially by the tool shank (5'), having a cover element, which has a perforated disc and an outlet opening (41), which, together with the tool shank (5), forms the annular gap, **characterized in that** the perforated disc fits in an end-side recess in the tool holder body (2).

2. Tool holder apparatus according to one of the preceding claims, **characterized in that** the storage and/or collecting chamber (30) is arranged within the receiving opening and is at least partially delimited by an internal chamfer (14) of the tool holder body (2) and a cover element (40).

3. Tool holder apparatus according to one of the preceding claims, **characterized in that** the cover element (40) fits in the recess in a resiliently preloaded manner.

4. Tool holder apparatus according to one of the preceding claims, **characterized in that** the cover element (40) is peripherally chamfered and fits in a corresponding undercut recess in the tool holder body (2).

5. Tool holder apparatus according to one of the preceding claims, **characterized in that** the cover element (40) is secured in the end-side recess in the tool holder body (2) by means of a rotary bayonet connection.

6. Tool holder apparatus according to one of the preceding claims, **characterized in that** the cover element (40) is welded to the end side (8) of the tool holder body (2).

7. Tool holder apparatus according to one of the preceding claims, **characterized in that** the cover element (40) has an outlet opening (41), which, together with the tool, forms the annular gap (34).

8. Tool holder apparatus according to one of the preceding claims, **characterized in that** the cover element (40) has, as fastening device, a holder ring or a plurality of holding pins, which fit (s) in corresponding mating fastening devices in the end side (8) of the tool holder body (2).

9. Tool holder apparatus according to one of the preceding claims, **characterized in that** the cover element (40) is configured in a radially set-back manner relative to the outer contour of the tool holder body (2).

10. Tool holder apparatus according to one of the preceding claims, **characterized in that** the cover element (40) has a jet-forming collar such that a jet-forming annular duct with a length is formed.

11. Tool holder apparatus according to Claim 10, **characterized in that** the ratio of the axial length of the jet-forming annular duct to the tool-shank diameter is in the range between 0.2:1 and 1:1, in particular in the range between 0.3:1 and 0.8:1, particularly preferably in the range from 0.4:1 to 0.7:1.

## Revendications

1. Dispositif porte-outil comprenant un corps de porte-outil (2) pour retenir de manière solidaire en rotation un outil rotatif (5) comprenant une tige (5') avec une portion de serrage (4) et une ouverture de réception (7) pour la tige (5') de l'outil (5), comprenant un dispositif d'alimentation en fluide de refroidissement pour du fluide de refroidissement sous pression, au moins un dispositif de guidage de fluide de refroidissement (12) pour guider le fluide de refroidissement vers la tige d'outil serrée (5'), un espace de stockage de fluide de refroidissement et/ou de collecte (30) étant prévus dans la région de l'extrémité libre (6) du corps de porte-outil (2), dans lequel débouche l'au moins un dispositif de guidage de fluide de refroidissement (12) et l'espace de stockage de fluide de refroidissement et/ou de collecte (30) étant connectés par le biais d'une fente annulaire (34) à l'environnement du dispositif porte-outil (1), l'espace de stockage de fluide de refroidissement et/ou de collecte (30) et la fente annulaire (34) étant limités au moins en partie par la tige d'outil (5'), et comprenant un élément de couvercle qui est un disque perforé et possède une ouverture de sortie (41) qui forme conjointement avec la tige d'outil (5) la fente annulaire, **caractérisé en ce que** le disque perforé repose dans un renfoncement frontal du corps de porte-outil (2).

2. Dispositif porte-outil selon l'une quelconque des revendications précédentes, **caractérisé en ce que** l'espace de stockage et/ou de collecte (30) est disposé à l'intérieur d'une ouverture de réception et est limité au moins en partie par un biseau intérieur (14) du corps de porte-outil (2) et par un élément de couvercle (40).

3. Dispositif porte-outil selon l'une quelconque des revendications précédentes, **caractérisé en ce que** l'élément de couvercle (40) repose dans le renfoncement de manière précontrainte par ressort.

4. Dispositif porte-outil selon l'une quelconque des revendications précédentes, **caractérisé en ce que** l'élément de couvercle (40) présente un bord biseauté et repose dans le corps de porte-outil (2) dans un renfoncement en contre-dépouille correspondant.

5. Dispositif porte-outil selon l'une quelconque des revendications précédentes, **caractérisé en ce que** l'élément de couvercle (40) est fixé au moyen d'une connexion à baïonnette rotative dans le renfoncement frontal du corps de porte-outil (2).

6. Dispositif porte-outil selon l'une quelconque des revendications précédentes, **caractérisé en ce que** l'élément de couvercle (40) est soudé au côté frontal (8) du corps de porte-outil (2).

7. Dispositif porte-outil selon l'une quelconque des revendications précédentes, **caractérisé en ce que** l'élément de couvercle (40) possède une ouverture de sortie (41) qui forme la fente annulaire (34) conjointement avec l'outil.

8. Dispositif porte-outil selon l'une quelconque des revendications précédentes, **caractérisé en ce que** l'élément de couvercle (40) présente, en tant que dispositif de fixation, une bague de retenue ou plusieurs boulons de retenue qui repose/reposent dans des dispositifs de fixation conjugués correspondants dans le côté frontal (8) du corps de porte-outil (2).

9. Dispositif de porte-outil selon l'une quelconque des revendications précédentes, **caractérisé en ce que** l'élément de couvercle (40) est réalisé de manière disposée radialement en retrait par rapport au contour extérieur du corps de porte-outil (2).

10. Dispositif de porte-outil selon l'une quelconque des revendications précédentes, **caractérisé en ce que** l'élément de couvercle (40) présente un rebord en forme de faisceau de telle sorte qu'un canal annulaire en forme de faisceau d'une certaine longueur soit formé.

11. Dispositif de porte-outil selon la revendication 10, **caractérisé en ce que** le rapport de la longueur axiale du canal annulaire en forme de faisceau au diamètre de la tige d'outil est situé dans une plage comprise entre 0,2:1 et 1:1, en particulier dans une plage comprise entre 0,3:1 et 0,8:1, particulièrement préférablement dans une plage de 0,4:1 à 0,7:1.
